# EUROPEAN PATENT APPLICATION

(11) **EP 3 840 147 A1**
(43) Date of publication of application: **23.06.2021**
(21) Application number: 19218035.4
(22) Date of filing: 19.12.2019
(51) Int. Cl.: H02G 1/12

(54) **A CABLE STRIPPER AND A METHOD FOR REMOVING INSULATION FROM A CABLE**

(71) Applicant: Vestas Offshore Wind A/S, 8200 Aarhus N. (DK)
(72) Inventor: KREMERS, Stephan, 41063 Mönchengladbach (DE); MADSEN, Søren Storm, 6000 Kolding (DK); PEDERSEN, Jakob, 8930 Randers NØ (DK)
(74) Representative: Vestas Patents Department

(57) **Abstract**

A method of removing at least part of an insulation layer (6) from a cable (5) is disclosed. A cable stripper (1) is provided, which comprises at least one crosswise cutting edge (3); at least one longitudinal cutting edge (10); means for pressing each of the cutting edges (3, 10) against the cable (5); and at least one heating element configured for applying heat to each of the cutting edges (3, 10). Heat is applied to each of the cutting edges (3, 10). At least part of the longitudinal extent of the insulation layer (6) is cut by pressing the at least one longitudinal cutting edge (10) against the cable (5) one or more times, and at least the outer crosswise perimeter of the insulation layer (6) is cut by pressing one or more of the at least one crosswise cutting edge (3) against the cable (5) one or more times. At least part of the insulation layer (6) is mechanically removed.

## Description

### FIELD OF THE INVENTION

The present invention relates to a method for removing insulation from a cable, such as an electrical cable or an optical cable. The present invention further relates to a cable stripper for removing insulation from a cable.

### BACKGROUND OF THE INVENTION

When installing cables, such as electrical cables or optical cables, it is necessary to remove at least part of the insulating material to access the conductive cores for operably connecting the cable to other equipment. This is, for instance, the case when installing heavy duty cables, e.g. main conductors above 100 mm² in power plants and in large wind turbines.

Previously, removal of insulating material has been done by cutting the insulating material by means of a sharp tool, or by heating the insulating material well beyond the melting point. The two approaches mentioned above introduce the risk of damaging or contaminating the conductive core during removal of the insulating material. Furthermore, removing the insulating material using a sharp tool only may be time consuming, unprecise, and potentially dangerous. Furthermore, heating the insulating material in order to remove it is energy consuming and therefore costly. Moreover, there are also health and safety hazards, as insulation is heated, it may develop unhealthy fumes and open flames.

### DESCRIPTION OF THE INVENTION

It is an object of embodiments of the invention to provide a method for removing at least part of an insulation layer from a cable, in which the conducting core of the cable is protected.

It is a further object of embodiments of the invention to provide a method for removing at least part of an insulation layer from a cable, which is less time consuming and less energy consuming than prior art methods.

It is an even further object of embodiments of the invention to provide a cable stripper which allows insulating material to be removed from a cable while protecting the conducting core of the cable.

It is an even further object of embodiments of the invention to provide a cable stripper which allows insulating material to be removed from a cable in a time efficient and energy efficient manner.

According to a first aspect, the invention provides a method of removing at least part of an insulation layer from a cable, the method comprising the steps of:
- providing a cable comprising a conductive core and an insulation layer, each of the conductive core and the insulation layer defining an extent along a longitudinal direction and an outer crosswise perimeter;
- providing a cable stripper, wherein the cable stripper comprises:
   ∘ at least one crosswise cutting edge;
   ∘ at least one longitudinal cutting edge;
   ∘ means for pressing each of the cutting edges against the cable; and
   ∘ at least one heating element configured for applying heat to each of the cutting edges;
- the at least one heating element applying heat to each of the cutting edges;
- cutting at least part of the longitudinal extent of the insulation layer by pressing the at least one longitudinal cutting edge against the cable one or more times;
- cutting at least the outer crosswise perimeter of the insulation layer by pressing one or more of the at least one crosswise cutting edge against the cable one or more times; and
- mechanically removing at least part of the insulation layer.

Thus, the method according to the first aspect of the invention is a method for removing at least part of an insulation layer from a cable. The cable may be an electrical cable, in which case the insulating layer is electrically insulating, and protects an electrically conductive core of the cable. Alternatively, the cable may be an optical cable capable of conducting light, in which case the insulating layer protects an optically conductive core of the cable.

According to the method, a cable, e.g. an electrical cable or an optical cable as described above, is initially provided. The cable comprises a conductive core and an insulation layer.

Each of the conductive core and the insulation layer defines an extent along a longitudinal direction and an outer crosswise perimeter. The longitudinal direction is preferably a direction along which the cable extends, i.e. if the cable has a cylindrical shape, the longitudinal direction is the cylinder axis. The extent of the conductive core and the insulation layer along the longitudinal direction may therefore be regarded as the length of the conductive core or the insulation layer, respectively.

The outer crosswise perimeter defines the dimensions of the cable along a direction which is substantially perpendicular to the longitudinal direction. More specifically, for a cylindrical cable, the outer crosswise perimeter would be the circular outer boundary of a cross section of the cable perpendicularly to the cylinder axis.

Furthermore, a cable stripper is provided. In the present context the term 'cable stripper' should be interpreted to mean a tool which can be applied for stripping a cable, i.e. for removing part of the insulation layer, thereby exposing the conductive core beneath the insulation layer.

The cable stripper comprises at least one crosswise cutting edge and at least one longitudinal cutting edge. In the present context the term 'cutting edge' should be interpreted to mean an edge, possibly a sharp edge, which can be applied for performing cutting actions. The at least one longitudinal cutting edge is arranged along a first direction, and the at least one crosswise cutting edge is arranged along a second direction which is non-parallel to, e.g. substantially perpendicular to, the first direction. Thus, in the present context the term 'crosswise' should be interpreted to mean a direction which has a component being perpendicular to another direction, i.e. to the first direction. When the cable stripper is in an operational position relative to a cable, the longitudinal cutting edge may be arranged along the longitudinal direction of the cable, and the crosswise cutting edge may be arranged along a direction being crosswise relative to the longitudinal direction.

The cable stripper further comprises means for pressing each of the cutting edges against the cable. Thereby the cutting edges can be initially moved into abutment with an outer surface of the cable, more particularly into abutment with the insulation layer of the cable, and may subsequently be pressed at least partly into the insulation layer.

The means for pressing the cutting edges against the cable may be a handle or the like which allows an operator to manually press the cutting edges against the cable. Alternatively or additionally, the means for pressing the cutting edges against the cable may comprise a mechanical mechanism, e.g. including biasing means, such as springs or elastic members, which urges the cutting edges towards the cable; a force multiplicator, which enhances the manual force applied by an operator; or an actuator, which for example may be electrically driven.

Finally, the cable stripper comprises at least one heating element configured for applying heat to each of the cutting edges. Thereby the cutting edges will be able to penetrate the insulation layer of the cable under the assistance of heat which will make the insulation material, that is in contact with the cutting edges, softer to cut into, thus requiring a lower mechanical force to press the cutting edges into the insulation layer. This will be described in further detail below.

The temperature of the cutting edges can be adjusted by controlling the amount of heat applied. The temperature selected is dependent on the insulation layer thickness, insulation material, and composition of the insulation layer. For example, this can be established by testing.

Thus, once a cable and a cable stripper as described above have been provided, the at least one heating element is activated, thereby applying heat to each of the cutting edges. Then at least part of the longitudinal extent of the insulation layer is cut by pressing the at least one longitudinal cutting edge against the cable one or more times. Furthermore, at least the outer crosswise perimeter of the insulation layer is cut by pressing one or more of the at least one crosswise cutting edge against the cable one or more times.

Thus, the cable stripper and the cable are arranged relative to each other in such a manner that the at least one longitudinal cutting edge is arranged along the longitudinal direction of the cable and the at least one crosswise cutting edge is arranged along the crosswise perimeter of the cable. Then the heated cutting edges are pressed against the cable, and the insulation layer of the cable is cut along the longitudinal direction and along the crosswise perimeter, using a combination of the heat applied to the insulation layer by the heated cutting edges and the pressure provided by the means for applying pressure to the cable. Thus, the cutting performed by the at least one crosswise cutting edge separates a piece of the insulating layer from the rest of the insulating layer, and the cutting performed by the at least one longitudinal cutting edge provides a slit in the separated piece of the insulation layer which allows the piece to be removed from the cable along a radial direction.

Since only the cutting edges need to be heated, and not the insulation material as such, the energy required for removing the insulation layer is less than for prior art methods. Furthermore, the combination of heat and mechanical pressure reduces the risk of causing damage to the cable, in particular to the conductive core of the cable, e.g. because the cutting can be controlled precisely, and because only limited heating of the insulation layer is needed.

Finally, at least part of the insulation layer is mechanically removed. For instance, a piece of the insulation layer which has been separated from the rest of the insulation layer by the cutting performed by means of the cutting edges, can be removed from the cable. Thus, the heated cutting edges are merely applied for separating a piece of the insulation layer from the cable, and this piece is then removed from the cable. This is more gentle to the cable, in particular to the conductive core of the cable, than melting or mechanical removal of the insulation layer.

The cable stripper may comprise at least two crosswise cutting edges, and the step of cutting at least the outer crosswise perimeter of the insulation layer may comprise pressing the at least two crosswise cutting edges simultaneously or sequentially against the cable at locations being displaced along the outer crosswise perimeter of the insulation layer.

According to this embodiment, the entire crosswise perimeter of the insulation layer may be cut by applying the at least two crosswise cutting edges in the manner described above at various locations on the cable, along the outer crosswise perimeter. Thereby a piece of the insulation layer can be separated from the rest of the insulation layer, as described above.

The cable stripper may comprise at least three crosswise cutting edges, and the step of cutting at least the outer crosswise perimeter of the insulation layer may be performed by pressing the at least three crosswise cutting edges simultaneously or sequentially against the cable at locations being displaced along the outer crosswise perimeter of the insulation layer one or more times.

According to this embodiment, the at least three crosswise cutting edges may be arranged circumferentially with respect to the cable, i.e. the at least three crosswise cutting edges may enclose the cable along the crosswise perimeter. Thereby the entire crosswise perimeter is cut, thereby separating a piece of the insulation layer from the rest of the insulation layer as described above, by pressing each of the at least three crosswise cutting edges against the cable at the positions where the respective crosswise cutting edges are located.

As an alternative, the step of cutting at least the outer crosswise perimeter of the insulation layer may further comprise:
- rotating the cable and/or the at least one crosswise cutting edge; and
- repeating pressing one or more of the at least one crosswise cutting edge against the cable one or more times.

According to this embodiment, instead of positioning crosswise cutting edges in mutually displaced positions along the entire crosswise perimeter, the cable and/or the at least one crosswise cutting edge is rotated, thereby causing a mutual rotational movement between the cable and the at least one crosswise cutting edge. Thereby the entire crosswise perimeter may be cut, using potentially only a single crosswise cutting edge, by repeatedly pressing the crosswise cutting edge against the cable at various positions along the crosswise perimeter.

The cable stripper may comprise at least one biasing element, and the at least one biasing element may at least assist in pressing at least one or each of the cutting edges against the cable. According to this embodiment, the pressure applied to the insulation layer from the cutting edges can be controlled accurately, thereby ensuring that the insulation layer is completely cut through, while avoiding damage to the conductive core. It was found that this balancing of force provided by the at least one biasing element being controllable so that sufficient pressure is applied to completely cut the insulation layer without damaging the conductive core was much easier to achieve when using the feature of heating the cutting edges in the cable stripper according to the invention. In other words, the combination of biasing element and heating of the cutting edges was surprisingly found to be particularly advantageous.

The biasing element could, e.g., be or comprise a spring, such as a compressible spring, which spring loads the cutting edges.

As an alternative, the step of pressing the cutting edges against the cable may be performed purely manually, or by means of another mechanism which urges the cutting edges towards the cable.

In an embodiment, the cable stripper according to the invention may comprise a force multiplicator which enhances the manual force applied. The force multiplicator may comprise a gear mechanism or a leverage mechanism.

The method may further comprise pulling the at least part of the insulation layer, which is to be removed, away from where at least the outer crosswise perimeter of the insulation layer is cut, simultaneously with cutting at least the outer crosswise perimeter of the insulation layer.

According to this embodiment, the steps of cutting and the step of mechanically removing a part of the insulation layer are performed substantially simultaneously, thereby allowing the removal of the insulation layer to be performed fast and efficiently. Furthermore, hereby the part of the insulation layer which is to be mechanically removed has already been pulled away from the rest of the insulation layer before the step of mechanically removing the at least part of the insulation layer is performed. Thereby the contact between the conductive core and the insulation layer has decreased, and it is easier to mechanically remove the insulation layer.

At least one of the at least one longitudinal cutting edge and at least one of the at least one crosswise cutting edge may be pressed against the electrical cable simultaneously one or more times.

According to this embodiment, the at least one longitudinal cutting edge and the at least one crosswise cutting edge are moved in unison. This may, e.g., be obtained by forming the cutting edges on a single cutting element. Alternatively, the movement of the cutting edges may simply be coordinated.

According to one embodiment, the cable may comprise two or more insulation layers. In this case, the insulation layers may be removed, one at a time, by repeating the process described above.

According to a second aspect the invention provides a cable stripper comprising:
- at least one crosswise cutting edge;
- at least one longitudinal cutting edge;
- means for pressing each of the cutting edges towards a centreline of the cable stripper; and
- at least one heating element configured for applying heat to each of the cutting edges,

wherein the at least one crosswise cutting edge is arranged substantially perpendicular to the at least one longitudinal cutting edge.

The cable stripper according to the second aspect of the invention may be used for performing the method according to the first aspect of the invention. A person skilled in the art would therefore readily recognise that any feature described in combination with the first aspect of the invention could also be combined with the second aspect of the invention, and vice versa. Accordingly, the remarks set forth above are equally applicable here.

Thus, the cable stripper according to the second aspect of the invention comprises at least one crosswise cutting edge and at least one longitudinal cutting edge, as described above with reference to the first aspect of the invention.

The cable stripper further comprises means for pressing each of the cutting edges towards a centreline of the cable stripper. In the present context, the term 'centre line of the cable stripper' should be interpreted to mean a line or an axis around which a cable arranged adjacent to the cable stripper, and which is about to have at least part of an insulation layer removed therefrom, is centred. Thus, when a cable is positioned as described above, the means for pressing the cutting edges towards the centreline is able to press the cutting edges against the cable, in the manner described above with reference to the first aspect of the invention.

The cable stripper further comprises at least one heating element configured for applying heat to each of the cutting edges. Thereby the cable stripper is capable of performing heat assisted cutting of the insulation layer of a cable, in the manner described above with reference to one or more of the embodiments of the first aspect of the invention.

The at least one crosswise cutting edge is arranged substantially perpendicular to the at least one longitudinal cutting edge. Thereby the cable stripper is capable of cutting the insulation layer of a cable along a longitudinal direction as well as along an outer crosswise perimeter, as described above with reference to the first aspect of the invention.

The cable stripper may advantageously be used on cables with one conductive core, but may also be used for stripping of cables with multiple cores, such as cables with, e.g., three conductive cores, each having an insulation cover and a common insulation layer encircling the (separately) insulated conductive cores.

Each of the at least one crosswise cutting edge may be convex. Thereby the at least one crosswise cutting edge can follow the curved line of an outer circumferential perimeter of a cylindrical cable. Accordingly, when cutting the insulation layer of the cable by means of at least one crosswise cutting edge, the cutting depth in the insulating layer is uniform.

Furthermore, the cable stripper is thereby capable of accommodating cables of various cross sectional diameters.

The cable stripper may further comprise at least two crosswise cutting edges being at least partly displaced with respect to each other along a crosswise perimeter. Thereby the crosswise cutting edges may, in combination, cover a larger part of the crosswise perimeter of a cable arranged adjacent to the cable stripper than the part covered by each of the crosswise cutting edges. For instance, the at least two crosswise cutting edges may be displaced with respect to each other along a direction being substantially perpendicular to the longitudinal cutting edge, and/or they may be angularly displaced with respect to each other.

The cable stripper may comprise at least three crosswise cutting edges being at least partly displaced with respect to each other along a crosswise perimeter. According to this embodiment, an even larger part of the crosswise perimeter can be covered by the crosswise cutting edges in combination. Three crosswise cutting edges may suitably cover the entire crosswise perimeter, while allowing the crosswise cutting edges to move individually towards and away from the centreline of the cable stripper. Thereby a cable can easily be positioned between the crosswise cutting edges, and the crosswise cutting edges can easily be pressed against the cable.

The cable stripper may be configured to define an open configuration and a closed configuration, and the crosswise cutting edges may be arranged closer to the centreline of the cable stripper in the closed configuration of the cable stripper than in the open configuration of the cable stripper.

According to this embodiment, when the cable stripper is in the open configuration, a cable can easily be positioned in the cable stripper. When the cable stripper is moved from the open configuration to the closed configuration, the crosswise cutting edges are moved closer to the centreline of the cable stripper, and thereby closer to a cable positioned therein. Thus, when the cable stripper is in the closed configuration, the cable may be firmly kept in place by the cable stripper. Thereby it is ensured that the cable does not move during the cutting, and the cutting is performed in a precise manner, for example with respect to the length of the treated section of the cable.

Each crosswise cutting edge may be arranged to be adjacent to or partly overlap with at least another one of the crosswise cutting edges in the closed configuration of the cable stripper. According to this embodiment, the entire crosswise perimeter can be covered by the crosswise cutting edges, and a piece of the insulation layer of a cable can thereby be completely detached from the rest of the insulation layer.

The cable stripper may further comprise a biasing element configured to apply a biasing force to at least one of the at least one crosswise cutting edge in a direction towards at least one longitudinal cutting edge and/or another one of the at least one crosswise cutting edge. In the case that the cable stripper is of a kind which is configured to define an open configuration and a closed configuration, the biasing element may, e.g., be configured to bias the crosswise cutting edge towards the closed configuration.

According to this embodiment, the pressure applied during cutting is at least partly provided by the biasing element. Thereby the applied pressure is well defined and controllable. Accordingly, it can easily be ensured that the cut penetrates the insulation layer, but no damage is caused to the conductive core.

For instance, the biasing force may be insufficient to force the crosswise cutting edge to perform a cut in a cable insulation of a first type when the crosswise cutting edge is not heated up, and the biasing force may be sufficient to force the crosswise cutting edge to perform a cut in the cable insulation of the first type when the crosswise cutting edge is heated up.

The cable insulation of the first type may, e.g., be a type of cable insulation which is used for cables to which it is typically relevant to apply the cable stripper.

According to this embodiment, it is not possible to accidentally cut the insulation layer of a cable, purely mechanically and by pressing the cutting edges against the cable, because the biasing force is insufficient to perform such a cut, unless the cutting edges are heated. On the other hand, when it is actually intended to perform cutting, this can easily be obtained by heating the cutting edges and applying the biasing force. Furthermore, the risk of causing damage to the conductive core is reduced, because less force is required in order to cut through the insulation layer, as described above with reference to the first aspect of the invention.

At least one or each of the at least one crosswise cutting edge and the at least one longitudinal cutting edge may be mechanically coupled so as to allow them to be pressed towards the centreline of the cable stripper and/or released in coordi nation.

According to this embodiment, at least some of the cutting edges are moved towards and away from the centreline of the cable stripper, and thereby towards and away from a cable positioned in the cable stripper, in unison, or in a coordinated manner. Thereby the cut along the longitudinal direction and the cut along the crosswise perimeter are performed simultaneously and to the same depth. For instance, the cutting edges may be formed on a single element which is moved towards or away from the centreline of the cable stripper. As an alternative, the cutting edges may be formed on separate elements, which are mechanically coupled to each other, or which are moved in a coordinated manner.

For instance, at least one crosswise cutting edge and at least one longitudinal cutting edge may form part of a substantially T-shaped cutting element.

The present invention further relates to a cable stripper assembly comprising a cable stripper according to the second aspect of the invention having a cable arranged therein.

### BRIEF DESCRIPTION OF THE DRAWINGS

The invention will now be described in further detail with reference to the accompanying drawings in which
Fig. 1 is a perspective view of a cable stripper according to a first embodiment of the invention,
Fig. 2 is a perspective view of a cable stripper according to a second embodiment of the invention,
Fig. 3 is a perspective view of a cable stripper according to a third embodiment of the invention,
Fig. 4 illustrates a cable stripper according to a fourth embodiment of the invention in an open configuration,
Fig. 5 illustrates the cable stripper of Fig. 4 in a closed configuration, and
Fig. 6 illustrates a cable with cuts performed by a cable stripper according to an embodiment of the invention.

### DETAILED DESCRIPTION OF THE DRAWINGS

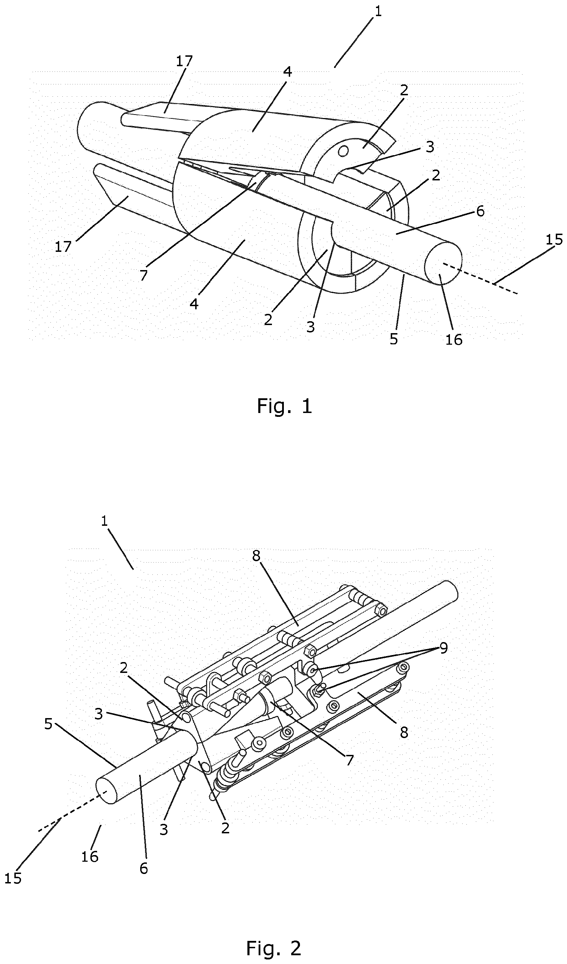

Fig. 1 is a perspective view of a cable stripper 1 according to a first embodiment of the invention. The cable stripper 1 comprises three cutting elements 2, each comprising a crosswise cutting edge 3 and a longitudinal cutting edge (not shown). A cover 4 is mounted on each cutting element 2. to ensure handling and use of the cable stripper 1.

The cutting elements 2 are positioned in such a manner that they are angularly displaced relative to each other along a crosswise perimeter, and such that the crosswise cutting edges 3 of the cutting elements 2 in combination cover the entire crosswise perimeter. The cable stripper 1 defines a centreline 15 extending through the cable stripper 1 between the cutting elements 2, and through the centre of a circle defined by the crosswise cutting edges 3 when engaged with a cable 5.

A cable 5 is positioned in the cable stripper 1 within a space defined by the cutting elements 2, and along the direction of the centreline 15 of the cable stripper 1. The cable 5 comprises an insulation layer 6 and a conductive core 16, and is arranged in abutment with an end stop 7, thereby ensuring that a predefined length of cable 5 is inserted into the cable stripper 1.

Each of the cutting elements 2 is movable between an open configuration and a closed configuration. In the closed configuration, the crosswise cutting edge 3 is closer to the centreline 15 of the cable stripper 1 than in the open configuration. In Fig. 1, one of the cutting elements 2 is in the open configuration, and the crosswise cutting edge 3 of this cutting element 2 is not arranged in abutment with the cable 5. The remaining two cutting elements 2 are in the closed configuration, and the crosswise cutting edges 3 of these two cutting elements 2 are thereby arranged in abutment with the cable 5.

When operating the cable stripper 1 of Fig. 1 in order to remove at least part of the insulation layer 6 of the cable 5, at least some of the cutting elements 2 are moved to the open configuration, for example by pressing handle 17, and the cable 5 is positioned in the cable stripper 1 as shown in Fig. 1. Then the cutting elements 2 are moved into the closed configuration, thereby moving the crosswise cutting edges 3 and the longitudinal cutting edges into abutment with the cable 5.

Then the crosswise cutting edges 3 and the longitudinal cutting edges are heated by means of heating elements (not shown), integrated in the cutting elements 2, and the cutting elements 2 are pressed towards the cable 5, thereby pressing the crosswise cutting edges 3 and the longitudinal cutting edges against the insulation layer 6 of the cable 5. The pressure may, e.g., be applied by an operator pressing manually against the covers 4. The combination of the heat applied to the cutting edges 3 and the pressure applied to the cutting elements 2 results in well defined cuts in the insulating layer 6 of the cable 5, along the longitudinal direction and along the crosswise perimeter.

Fig. 2 is a perspective view of a cable stripper 1 according to a second embodiment of the invention. The cable stripper of Fig. 2 is very similar to the cable stripper 1 of Fig. 1, and it will therefore not be described in detail here. The cable stripper 1 of Fig. 2 is not provided with covers. In Fig. 2 all three cutting elements 2 are in the closed configuration.

In Fig. 2 it can be seen that each of the cutting elements 2 is mounted on a structure 8 being pivotally movable about a hinge 9, thereby allowing each cutting element 2 to move between the open configuration and the closed configuration.

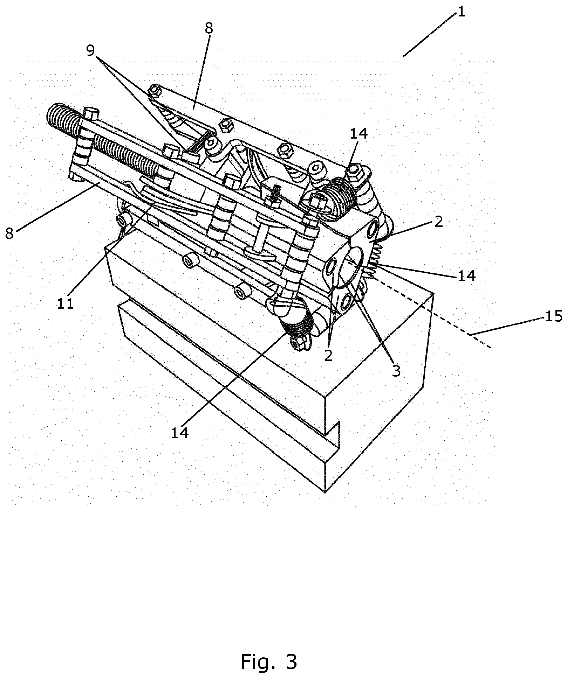

Fig. 3 is a perspective view of a cable stripper 1 according to a third embodiment of the invention. The cable stripper 1 of Fig. 3 is very similar to the cable strippers 1 of Figs. 1 and 2, and it will therefore not be described in detail here. In the cable stripper 1 of Fig. 3 all of the cutting elements 2 are in the closed configuration. Furthermore, electrical cables 11 supplying power to the heating elements of the cutting edges 3 are shown.

The cable stripper 1 of Fig. 3 is provided with biasing elements in the form of springs 14 configured to bias the structures 8 carrying the cutting elements 2 towards the closed configuration. The springs 14 assist in providing pressure to the cutting elements 2 during the cutting.

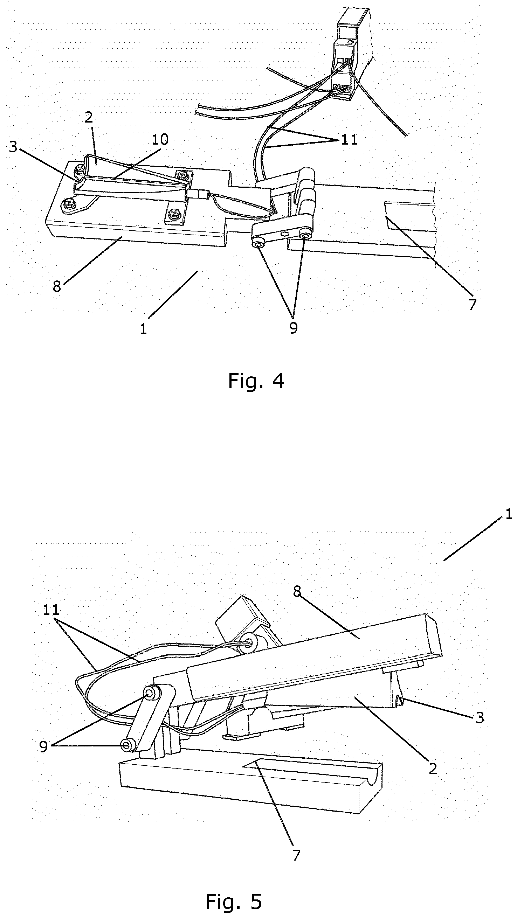

Figs. 4 and 5 illustrate a cable stripper 1 according to a fourth embodiment of the invention. In Fig. 4 the cable stripper 1 is in an open configuration, and in Fig. 5 the cable stripper 1 is in a closed configuration. The cable stripper 1 of Figs. 4 and 5 comprises only one cutting element 2 comprising a crosswise cutting edge 3 and a longitudinal cutting edge 10.

A cable (not shown) can be positioned in the cable stripper 1 in such a manner that an end of the cable abuts end stop 7. Then the structure 8 carrying the cutting element 2 is rotated towards the cable, via hinges 9, to position the cutting edges 3, 10 in abutment with the cable, i.e. the cable stripper 1 is moved to the configuration shown in Fig. 5.

Heating elements (not shown) integrated in the cutting element 2 are then activated by supplying electrical power to the heating elements via electrical cables 11, in order to supply heat to the cutting edges 3, 10. Thereby the cutting edges 3, 10 are heated.

The heated cutting edges 3, 10 are then pressed against the cable by pushing the structure 8 carrying the cutting element 2. Thereby the insulation layer of the cable is cut along the longitudinal direction and along the crosswise perimeter, in the region of the cable which faces the cutting element 2, due to a combination of the heat and the pressure.

Next the structure 8 carrying the cutting element 2 is moved back to the open configuration shown in Fig. 4, and the cable or the cable stripper 1 is rotated in order to position another part of the cable to face the cutting element 2. The structure 8 carrying the cutting element 2 is then moved back to the configuration shown in Fig. 5, thereby positioning the cutting edges 3, 10 in abutment with another part of the cable, and the cutting process described above is repeated. If required, this is repeated until the insulation layer of the cable has been cut along the entire crosswise perimeter.

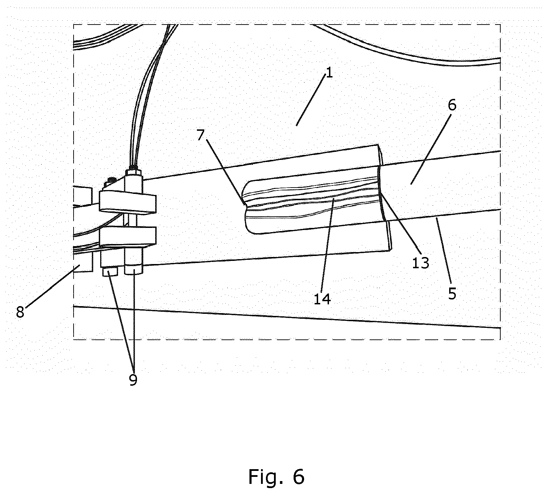

Fig. 6 shows a cable 5 positioned in a cable stripper 1 according to an embodiment of the invention. The cable stripper 1 is in an open configuration, and the cable stripper 1 could, e.g., be the cable stripper 1 illustrated in Figs. 4 and 5.

It can be seen that the cable 5 has been provided with a cut 12 along a longitudinal direction and with a cut 13 along a crosswise perimeter. It should be observed that, even if the insulation layer 6 of the cable 5 in Fig. 6 has not been cut completely through, the removal of the insulation layer 6 for the treated cable section is still much easier and safer than if the cable 5 had not been treated using the cable stripper 1 according to the invention.

## Claims

1. A method of removing at least part of an insulation layer (6) from a cable (5), the method comprising the steps of:
- providing a cable (5) comprising a conductive core and an insulation layer (6), each of the conductive core and the insulation layer (6) defining an extent along a longitudinal direction and an outer crosswise perimeter;
- providing a cable stripper (1), wherein the cable stripper (1) comprises:
∘ at least one crosswise cutting edge (3);
∘ at least one longitudinal cutting edge (10);
∘ means for pressing each of the cutting edges (3, 10) against the cable (5); and
∘ at least one heating element configured for applying heat to each of the cutting edges (3, 10);
- the at least one heating element applying heat to each of the cutting edges (3, 10);
- cutting at least part of the longitudinal extent of the insulation layer (6) by pressing the at least one longitudinal cutting edge (10) against the cable (5) one or more times;
- cutting at least the outer crosswise perimeter of the insulation layer (6) by pressing one or more of the at least one crosswise cutting edge (3) against the cable (5) one or more times; and
- mechanically removing at least part of the insulation layer (6).

2. A method according to claim 1, wherein the cable stripper (1) comprises at least two crosswise cutting edges (3), and wherein the step of cutting at least the outer crosswise perimeter of the insulation layer (6) comprises pressing the at least two crosswise cutting edges (3) simultaneously or sequentially against the cable (5) at locations being displaced along the outer crosswise perimeter of the insulation layer (6).

3. A method according to claim 2, wherein the cable stripper (1) comprises at least three crosswise cutting edges (3), and wherein the step of cutting at least the outer crosswise perimeter of the insulation layer (6) is performed by pressing the at least three crosswise cutting edges (3) against the cable (5) at locations being displaced along the outer crosswise perimeter of the insulation layer (6) one or more times.

4. A method according to claim 1 or 2, wherein the step of cutting at least the outer crosswise perimeter of the insulation layer (6) further comprises:
- rotating the cable (5) and/or the at least one crosswise cutting edge (3); and
- repeating pressing one or more of the at least one crosswise cutting edge (3) against the cable (5) one or more times.

5. A method according to any of the preceding claims, wherein the cable stripper (1) comprises at least one biasing element (14), and wherein the at least one biasing element (14) at least assists in pressing at least one or each of the cutting edges (3, 10) against the cable (5).

6. A method according to any of the preceding claims, wherein the method further comprises pulling the at least part of the insulation layer (6), which is to be removed, away from where at least the outer crosswise perimeter of the insulation layer (6) is cut, simultaneously with cutting at least the outer crosswise perimeter of the insulation layer (6).

7. A method according to any of the preceding claims, wherein at least one of the at least one longitudinal cutting edge (10) and at least one of the at least one crosswise cutting edge (3) are pressed against the electrical cable (5) simultaneously one or more times.

8. A cable stripper (1) comprising:
- at least one crosswise cutting edge (3);
- at least one longitudinal cutting edge (10);
- means for pressing each of the cutting edges (3, 10) towards a centreline (15) of the cable stripper (1); and
- at least one heating element configured for applying heat to each of the cutting edges (3, 10),
wherein the at least one crosswise cutting edge (3) is arranged substantially perpendicular to the at least one longitudinal cutting edge (10).

9. A cable stripper (1) according to claim 8, wherein each of the at least one crosswise cutting (3) edge is convex.

10. A cable stripper (1) according to claim 8 or 9, further comprising at least two crosswise cutting edges (3) being at least partly displaced with respect to each other along a crosswise perimeter.

11. A cable stripper (1) according to claim 10, comprising at least three crosswise cutting edges (3) being at least partly displaced with respect to each other along a crosswise perimeter.

12. A cable stripper (1) according to claim 10 or 11, wherein the cable stripper (1) is configured to define an open configuration and a closed configuration, and wherein the crosswise cutting edges (3) are arranged closer to the centreline (15) of the cable stripper (1) in the closed configuration of the cable stripper (1) than in the open configuration of the cable stripper (1).

13. A cable stripper (1) according to claims 9 and 12, wherein each crosswise cutting edge (3) is arranged to be adjacent to or partly overlap with at least another one of the crosswise cutting edges (3) in the closed configuration of the cable stripper (1).

14. A cable stripper (1) according to any of claims 8-13, further comprising a biasing element (14) configured to apply a biasing force to at least one of the at least one crosswise cutting edge (3) in a direction towards at least one longitudinal cutting edge (10) and/or another one of the at least one crosswise cutting edge (3).

15. A cable stripper (1) according to claim 14, wherein the biasing force is insufficient to force the crosswise cutting edge (3) to perform a cut in a cable insulation (6) of a first type when the crosswise cutting edge (3) is not heated up, and the biasing force is sufficient to force the crosswise cutting edge (3) to perform a cut in the cable insulation (6) of the first type when the crosswise cutting edge (3) is heated up.

16. A cable stripper (1) according to any of claims 8-15, wherein at least one or each of the at least one crosswise cutting edge (3) and the at least one longitudinal cutting edge (10) are mechanically coupled so as to allow them to be pressed towards the centreline (15) of the cable stripper (1) and/or released in coordination.

17. A cable stripper (1) according to claim 16, wherein at least one crosswise cutting edge (3) and at least one longitudinal cutting edge (10) form part of a substantially T-shaped cutting element (2).
